# EUROPÄISCHE PATENTSCHRIFT

(11) **EP 3 463 612 B1**
(45) Veröffentlichungstag und Bekanntmachung des Hinweises auf die Patenterteilung: **07.07.2021**
(21) Anmeldenummer: 17723398.8
(22) Anmeldetag: 15.05.2017
(51) Int. Cl.: B01D 35/153, B01D 35/16

(54) **FILTEREINRICHTUNG**
FILTER DEVICE
DISPOSITIF FILTRANT

(30) Priorität: 06.06.2016 DE 102016209919
(43) Veröffentlichungstag der Anmeldung: 10.04.2019
(73) Patentinhaber: Mahle International GmbH, 70376 Stuttgart (DE)
(72) Erfinder: BRAUNHEIM, Michael, 73035 Göppingen (DE)
(74) Vertreter: BRP Renaud & Partner mbB Rechtsanwälte Patentanwälte Steuerberater
(86) Internationale Anmeldenummer: PCT/EP2017/061608
(87) Internationale Veröffentlichungsnummer: WO 2017/211541

(56) Entgegenhaltungen:
- EP-A1- 2 547 415
- DE-A1-102008 049 006
- DE-A1-102011 077 798
- US-A1- 2012 267 293

## Beschreibung

Die vorliegende Erfindung betrifft eine Filtereinrichtung mit einem, einen Filtergehäusetopf und einen Filtergehäusedeckel aufweisenden Filtergehäuse, in dem ein Einsatz angeordnet ist, gemäß dem Oberbegriff des Anspruchs 1, sowie einen Einsatz gemäß Anspruch 9.

Aus der EP 2 490 786 B1 ist eine gattungsgemäße Filtereinrichtung mit einem, einen Filtergehäusetopf und einen Filtergehäusedeckel aufweisenden Filtergehäuse bekannt, in dem ein Ringfilterelement angeordnet ist, das an einer unteren Endscheibe einen exzentrisch angeordneten und axial abstehenden Pin aufweist, mittels welchem es bei montierter Filtereinrichtung in einen filtergehäusetopfseitigen Kanal, insbesondere einen Leerlaufkanal, eingreift. Am Filtergehäusetopf ist darüber hinaus eine Führungsrampe vorgesehen, die mit einer am Ringfilterelement angeordneten Führungseinrichtung zusammenwirkt.

Aus der DE 103 53 424 B4 ist ebenfalls eine Filtereinrichtung bekannt mit einem topfförmigen unteren Filtergehäuse und einem über ein Umfangsgewinde auf das untere Filtergehäuse aufschraubbaren und das untere Filtergehäuse verschließbaren Schraubdeckel. In dem Filtergehäuse ist dabei ein Einsatz angeordnet, der reibschlüssig drehbar über einen axialen Rastverschluss mit dem Schraubdeckel verbindbar ist und an seiner dem Boden des unteren Filtergehäuses zugeordneten Stirnseite einen exzentrisch angeordneten Pin aufweist.

Aus der DE 10 2008 049 006 A1 ist eine Filtereinrichtung mit einem Filtergehäusetopf, einem Filtergehäusedeckel und einem Filtergehäuse bekannt, in welchem ein Einsatz angeordnet ist. Der Einsatz hat eine Endscheibe, ein exzentrisch angeordnetes und axial abstehendes erstes Positionierelement, mittels welchem er bei montierter Filtereinrichtung in eine filtergehäusetopfseitige Positionierkontur eingreift. Am Filtergehäusetopf ist darüber hinaus eine Führungsrampe vorgesehen, die mit einer an der Endscheibe angeordneten Führungseinrichtung zusammenwirkt.

In modernen Motorräumen von Kraftfahrzeugen steht immer weniger Bauraum zur freien Verfügung, so dass stets versucht wird, bislang nicht erschlossenen Bauraum zur Anordnung von Komponenten neu zu erschließen. Bei aus dem Stand der Technik bekannten Filtereinrichtungen ist beispielsweise eine im Filtergehäusetopf angeordnete Führungsrampe vorgesehen, die von einem Hochpunkt ringförmig um nahezu 360° bis zu einem Tiefpunkt und einem sich daran anschließenden Leerlaufkanal verläuft. Wird in diesem Filtergehäusetopf ein Ringfilterelement eingesetzt und mit dem Filtergehäusedeckel beim Aufschrauben verdreht, so gleitet das Ringfilterelement über seinen Pin üblicherweise entlang der Führungsrampe, bis es mit seinem Pin dichtend in den Leerlaufkanal eingreift. Nachteilig bei einem derartigen System ist jedoch, dass die Führungsrampe nahezu geschlossen ringförmig ausgebildet ist und dadurch einen kompletten Bodenbereich des Filtergehäusetopfs belegt, der in diesem Fall nicht für andere Komponenten nutzbar ist.

Die vorliegende Erfindung beschäftigt sich daher mit dem Problem, für eine Filtereinrichtung der gattungsgemäßen Art eine verbesserte oder zumindest eine alternative Ausführungsform anzugeben, die die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Führungsrampe zum Heranführen eines exzentrisch und axial von einer unteren Endscheibe eines Einsatzes oder von dem Einsatz selbst abstehenden ersten Positionierelements, insbesondere eines Pins oder einer Rippe, nicht mehr nahezu geschlossen ringförmig auszubilden, sondern lediglich noch ringsegmentartig, wobei sich die Führungsrampe erfindungsgemäß durchgehend über maximal 270° erstreckt, so dass zumindest zwischen einer gehäuseseitigen Positionierkontur, beispielsweise einem Kanal oder einer Ausnehmung, insbesondere einem Schlitz, und der Führungsrampe noch ein bislang nicht genutzter bzw. durch die Führungsrampe belegter Bauraum verbleibt, der nun erstmals für die Anordnung weiterer Komponenten nutzbar ist. Die erfindungsgemäße Filtereinrichtung, welche beispielsweise als Öl- oder Kraftstofffilter ausgebildet ist, besitzt dabei ein einen Filtergehäusetopf und einen Filtergehäusedeckel aufweisendes Filtergehäuse, in welchem der zuvor erwähnte Einsatz angeordnet ist. An diesem Einsatz, beispielsweise einem Ringfilterelement, oder an dessen unterer Endscheibe ist dabei das exzentrisch angeordnete und axial abstehende erste Positionierelement, beispielsweise der Pin oder die Rippe, vorgesehen ist, mittels welchem er bei montierter Filtereinrichtung in die filtergehäusetopfseitige Positionierkontur, beispielsweise einen Kanal oder eine Ausnehmung, insbesondere einen Schlitz, eingreift, wobei am Filtergehäusetopf eine Führungsrampe vorgesehen ist, die mit einer am Einsatz angeordneten Führungseinrichtung zusammenwirkt. Die Führungsrampe ist erfindungsgemäß ringsegmentartig ausgebildet und erstreckt sich durchgehend über maximal 270°. Wie bereits eingangs erwähnt, ist es hierdurch erstmals möglich, den nun nicht mehr durch die Führungsrampe belegten und frei gewordenen Bereich für die Anordnung von Zusatzkomponenten, wie beispielsweise für die Anordnung einer Pumpe, eines Ventils, eines Thermostats oder eines Heizers zu nutzen. Hierdurch ist es möglich, eine im Vergleich zu bisherigen Filtereinrichtungen kompakte Bauweise zu schaffen, die den bislang nicht genutzten Bauraum erstmals nutzt. Erfindungsgemäß weist die Führungseinrichtung ein zweites Positionierelement auf, wobei am Einsatz zumindest ein Steg angeordnet ist, der das zweite Positionierelement bildet. Dabei sind zumindest zwei derartige Stege mit unterschiedlichen axialen Längserstreckungen an der unteren Endscheibe des Einsatzes oder an diesem direkt angeordnet sind. Ein weiterer wichtiger Vorteil kann sein, dass bei einem lageorientierten Verbau des Einsatzes eine gezielte Beeinflussung der Strömung durch zusätzliche Rippen oder andere strömungslenkende Elemente am Einsatz, Gehäuse oder durch Zusatzbauteile erfolgen kann. Ziel der gezielten Beeinflussung kann z.B. sein, dass kalte und warme Medien aus unterschiedlichen Einströmstellen besser vermischt werden, bzw. dass die Verweilzeit von warmem Kraftstoff im Filterbereich verlängert und so das Blockieren des Einsatzes/Filterelements aufgrund von Paraffinausscheidungen aus dem kalten Kraftstoff verhindert wird.

Dabei weist die Führungseinrichtung zumindest zwei Positionierelemente auf. Ein zweites Positionierelement kann beispielsweise ein Steg am Einsatz sein. Hierdurch ist es möglich, den Einsatz unabhängig von seiner Winkelstellung bezüglich seiner Hochachse in den Filtergehäusetopf einzusetzen, wobei entweder das erste Positionierelement oder aber zumindest das zweite Positionierelement, das heißt beispielsweise der Steg, auf der ringsegmentartigen Führungsrampe entlang läuft und dadurch die Führung des ersten Positionierelements, beispielsweise des Pins, zur Positionierkontur, beispielsweise einem Kanal, bewirkt. Dies gewährleistet auch, dass für den Fall, in welchem der Einsatz derart in den Filtergehäusetopf eingesetzt wird, dass das erste Positionierelement nicht auf der Führungsrampe aufsitzt, das zweite Positionierelement, das heißt beispielsweise der zumindest eine Steg die Führungsfunktion übernimmt und das erste Positionierelement zuverlässig zur filtergehäusetopfseitigen Positionierkontur, beispielsweise dem Kanal, führt.

Ist das erste Positionierelement als Pin ausgebildet und die Positionierkontur als Kanal und ist zudem der Pin fluchtend zum Kanal angeordnet, hat der zumindest eine Steg, das heißt das zweite Positionierelement, keinen Kontakt mehr mit der Führungsrampe und der Pin kann somit über seine Einführfase im Kanal zentriert und nach unten in diesen eingeschoben werden. Der Filtergehäusedeckel kann dabei gut als Montagehilfe genutzt werden, da dieser die maximale Schrägstellung des Einsatzes im Filtergehäusetopf während der Montage limitiert. So kann der Einsatz wahllos in das Filtergehäuse eingelegt, der Filtergehäusedeckel aufgesetzt und eingeschraubt werden. Die Positionierung des Pins relativ zum Kanal bzw. das Einführen des Pins in diesen Kanal erfolgt dabei ohne weiteres Zutun.

Dabei gilt, dass der Einsatz durch das erste Positionierelement (z.B. Pin) positioniert werden kann, der gleichzeitig eine Leerlauffunktion hat, wenn er aus der Pinaufnahme bzw. dem Kanal herausgezogen wird. Der Einsatz kann dabei auch durch ein erstes Positionierelement positioniert werden, das keine Leerlauffunktion hat. Dann gibt es keinen Kanal, sondern nur eine entsprechende Positionierkontur. Alternativ ist auch denkbar, dass der Einsatz als erstes Positionierelement eine Rippe aufweist und die Positionierkontur als Schlitz im Gehäuse ausgebildet ist, dann ist das erste Positionierelement nicht rund und die Positionierkontur kein Kanal. Der Schlitz im Gehäuse kann auch sehr breit sein, sodass die Positionierung mit zwei Positionierelementen, beispielsweise Rippen, erfolgt, die einen entsprechenden Abstand haben. Dann wirken zwei Schultern mit zwei Rippen als Positionierelemente zusammen, die nicht rund sind.

Bei einer vorteilhaften Weiterbildung der erfindungsgemäßen Lösung ist die Führungseinrichtung einstückig mit der unteren Endscheibe des Einsatzes ausgebildet. Unabhängig von der Ausbildung der Führungseinrichtung bzw. der Positionierelemente, das heißt unabhängig davon, ob diese als Pin, Rippe oder als Steg ausgebildet sind, ist es somit möglich, die Führungseinrichtung kostengünstig und zugleich qualitativ hochwertig sowie fertigungstechnisch einfach herzustellen.

Bei einer weiteren vorteilhaften Ausführungsform der erfindungsgemäßen Lösung ist die Führungsrampe ebenfalls ringsegmentartig ausgebildet, erstreckt sich jedoch durchgehend über maximal 180°. Hierdurch ist eine nochmalige Verkürzung der Führungsrampe in Umfangsrichtung möglich, wodurch weiterer Bauraum zur Anordnung von Zusatzkomponenten erschlossen werden kann. Denkbar ist dabei selbstverständlich auch, dass die Führungsrampe unterbrochen über mehrere Ringsegmente ausgebildet ist und sich dabei die gesamte Umfangslänge der einzelnen Ringsegmente maximal über 270°, vorzugsweise maximal über 180°, erstreckt. Hierdurch ist es insbesondere möglich, Zusatzkomponenten an nahezu beliebigen Zwischenstellen anzuordnen.

Bei einer weiteren vorteilhaften Ausführungsform der erfindungsgemäßen Lösung weist die Führungsrampe einen Hochpunkt und einen im Bereich der Positionierkontur, beispielsweise des Kanals, angeordneten Tiefpunkt auf. Alternativ hierzu ist auch denkbar, dass die Führungsrampe einen Hochpunkt und beidseitig abfallende Rampenteilstücke aufweist, wobei ein Tiefpunkt im Bereich der Positionierkontur, beispielsweise des Kanals, angeordnet ist. Bei einer lediglich einseitig abfallenden Rampe bewirkt diese im Zusammenspiel mit der einsatzseitigen Führungseinrichtung ein zuverlässiges Zuführen des Pins zum Kanal, das heißt des ersten Positionierelements zur Positionierkontur. Bei beidseitig abfallenden Teilstücken und bei Filtergehäusedeckeln mit Feingewinde kann es erforderlich sein, den Filtergehäusedeckel kurz entgegen der Aufschraubrichtung zu drehen, wodurch sich das Gewinde findet und der Einsatz ohne weiteres Zutun positioniert werden kann. Der Filtergehäusedeckel kann dann aufgeschraubt werden. Erst wenn in diesem Fall das erste Positionierelement die Positionierkontur, das heißt der Pin den Kanal, erreicht und in diesen eintaucht, greift das Gewinde und der Einsatz wird über die Gewindesteigung vom Filtergehäusedeckel in seine Endposition gedrückt. Hierdurch kann eine Beschädigung des Einsatzes zuverlässig vermieden werden.

Zweckmäßig ist in dem nicht von der Führungsrampe belegten Bereich des Filtergehäusetopfes eine Zusatzkomponente, wie beispielsweise ein Heizer, ein Thermostat, eine Pumpe, ein Ventil oder eine Leitung, angeordnet. Bereits diese nicht abschließende Aufzählung lässt erahnen, welch mannigfaltige Möglichkeiten für die Anordnung von Zusatzkomponenten durch die sich lediglich ringsegmentartig über einen Teilbereich des Umfangs erstreckende Führungsrampe gegeben wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung beim Einsetzen eines Einsatzes,
- Fig. 2: eine Darstellung wie in Fig. 1, jedoch bei einer anderen Stellung des Einsatzes,
- Fig. 3: eine Schnittdarstellung durch die erfindungsgemäße Filtereinrichtung bei auf einer Führungsrampe gleitenden Positionierelementen,
- Fig. 4: ein der Fig. 3 nachfolgender Montageschritt, bei welchem ein Pin bereits fluchtend zu einem Leerlaufkanal ausgerichtet ist,
- Fig. 5: eine Ansicht von oben auf einen Filtergehäusetopf,
- Fig. 6: einen Einsatz in einer Seitenansicht.

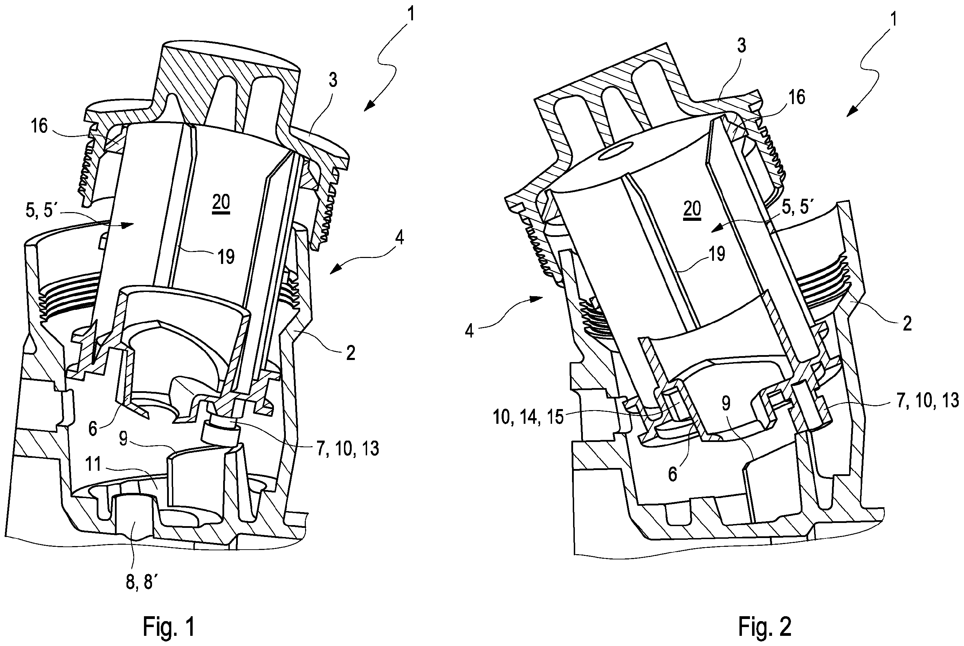

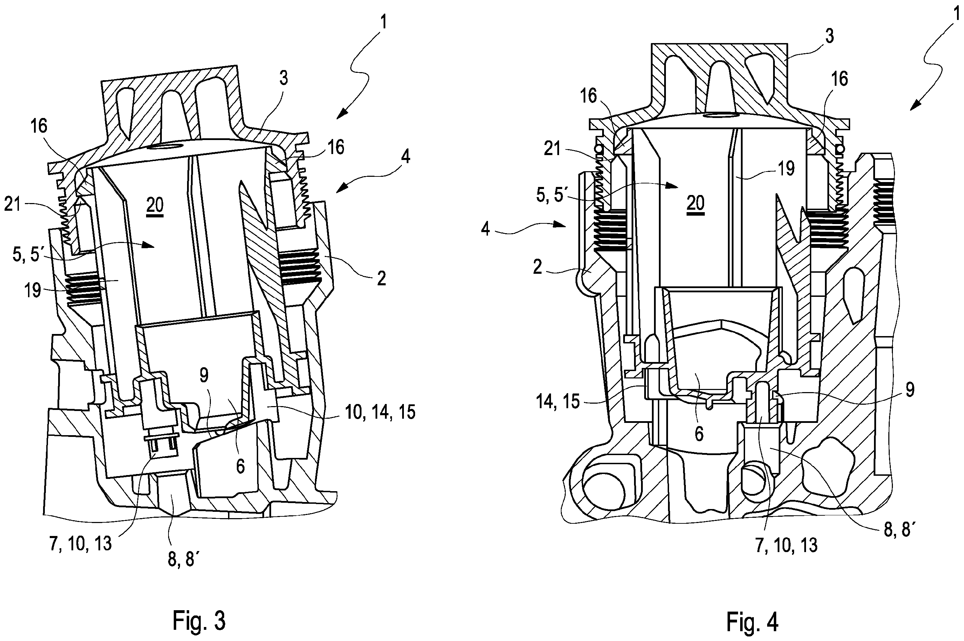

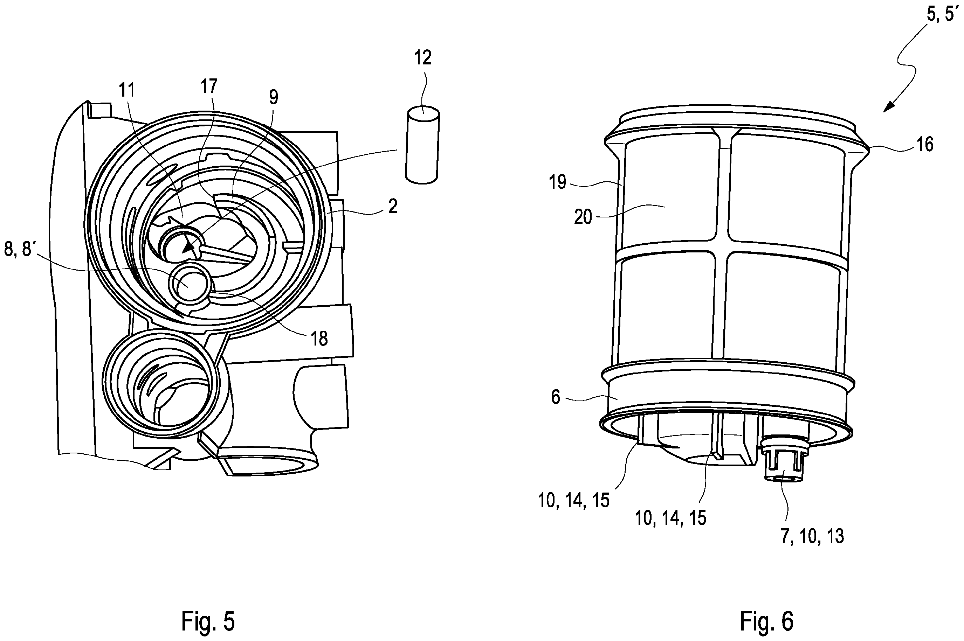

Entsprechend den Figuren 1 bis 4, weist eine erfindungsgemäße Filtereinrichtung 1, welche beispielsweise als Öl- oder Kraftstofffilter ausgebildet sein kann, ein einen Filtergehäusetopf 2 und einen Filtergehäusedeckel 3 aufweisendes Filtergehäuse 4 auf, in welchem ein Einsatz 5, beispielsweise ein Ringfilterelement 5', angeordnet ist. Im Folgenden wird dabei der Einsatz 5 stets als Ringfilterelement 5' bezeichnet, wobei es selbstverständlich auch denkbar ist, dass dieser, wie in den Figuren 1 bis 4 und 6 dargestellt ist, lediglich ein Siebeinsatz ist. Dies bedeutet, dass in der gesamten Anmeldung der Begriff "Ringfilterelement" durch den Begriff "Einsatz" ersetzt werden könnte, ohne den Rahmen der Erfindung zu verlassen. An dem Ringfilterelement 5' bzw. an dessen unterer Endscheibe 6 ist ein exzentrisch angeordnetes und axial abstehendes erstes Positionierelement 13 vorgesehen, mittels welchem es bei montierter Filtereinrichtung 1 in eine filtergehäusetopfseitige Positionierkontur 8 eingreift, wobei am Filtergehäusetopf 2 eine Führungsrampe 9 vorgesehen ist, die mit einer am Ringfilterelement 5' angeordneten Führungseinrichtung 10 zusammenwirkt. Gemäß den Figuren 1 bis 6 sind dabei das erste Positionierelement 13 als Pin 7 und die Positionierkontur 8 als Kanal 8' ausgebildet. An der unteren Endscheibe 6 des Ringfilterelements 5' ist in den gezeigten Figuren 1 bis 6 somit ein exzentrisch angeordneter und axial abstehender Pin 7 vorgesehen, der bei montierter Filtereinrichtung 1 in einen filtergehäusetopfseitigen Kanal 8', insbesondere einen Leerlaufkanal, dichtend eingreift. Am Filtergehäusetopf 2 ist dabei eine Führungsrampe 9 vorgesehen, die mit einer am Filterelement 5' (Einsatz 5) angeordneten Führungseinrichtung 10 zusammenwirkt. Erfindungsgemäß ist nun die Führungsrampe 9 ringsegmentartig ausgebildet und erstreckt sich durchgehend über maximal 270°, vorzugsweise sogar über maximal 180° (vergleiche Figur 5). Ebenso kann vorgesehen sein, dass die Führungsrampe 9 unterbrochen ausgebildet ist und zumindest zwei Ringsegmente aufweist, die sich zusammen über maximal 180° erstrecken. Hierdurch ist es möglich, den nunmehr nicht von der Führungsrampe 9 belegten Bauraum 11 (vergleiche Figur 5) mit anderen Zusatzkomponenten 12, beispielsweise einem Heizer, einem Thermostat, einer Pumpe, einem Ventil oder einer Leitung, zu belegen.

Betrachtet man die Figuren 1 bis 4 und 6 weiter, so kann man erkennen, dass die Führungseinrichtung 10 zumindest zwei Positionierelemente 13, 14 aufweist, wobei beispielsweise der Pin 7 eines der zwei Positionierelemente 13 bildet. Am Ringfilterelement 5' ist darüber hinaus ein Steg 15 angeordnet, der das zumindest eine zweite Positionierelement 14 bildet. Selbstverständlich können auch mehrere derartige Stege 15 (vergleiche Figur 6) mit unterschiedlichen axialen Längserstreckungen an der unteren Endscheibe 6 des Ringfilterelements 5' oder an diesem direkt angeordnet sein. Über derartige Stege 15 bzw. Rippen kann auch bei einem lageorientierten Verbau des Einsatzes 5 eine gezielte Beeinflussung der Strömung durch zusätzliche Rippen oder andere strömungslenkende Elemente am Einsatz 5, Gehäuse 4 oder durch Zusatzbauteile erfolgen kann. Ziel der gezielten Beeinflussung kann z.B. sein, dass kalte und warme Medien aus unterschiedlichen Einströmstellen besser vermischt werden, bzw. dass die Verweilzeit von warmem Kraftstoff im Filterbereich verlängert und so das Blockieren des Einsatzes/Ringfilterelements 5, 5' aufgrund von Paraffinausscheidungen aus dem kalten Kraftstoff verhindert wird.

Mit der erfindungsgemäßen Führungseinrichtung 10, den Positionierelementen 13, 14 und der zugehörigen Führungsrampe 9 ist es unabhängig von einer Drehwinkelstellung des Ringfilterelements 5' um eine Hochachse möglich, dieses zuverlässig in das Filtergehäuse 4 einzubauen und dabei zu gewährleisten, dass das erste Positionierelement 13, das heißt im vorliegenden Fall der Pin 7, in die Positionierkontur 8, das heiß in den Kanal 8' eintaucht. Je nach Drehwinkelstellung ist dabei zumindest eines der Positionierelemente 13, 14 der Führungseinrichtung 10 in Kontakt mit der Führungsrampe 9, bis zu dem Zeitpunkt, an welchem der Pin 7 in den Kanal 8' eingreift. Zu diesem Zeitpunkt hat keines der Positionierelemente 13, 14 mehr Kontakt zur Führungsrampe 9.

Um die Führungseinrichtung 10 möglichst kostengünstig ausbilden zu können, wird diese vorzugsweise einstückig mit der unteren Endscheibe 6 des Ringfilterelements 5', beispielsweise in einem gemeinsamen Kunststoffspritzgussvorgang, hergestellt. An einem oberen Ende des Ringfilterelements 5' ist dabei eine Rastkontur 16 vorgesehen, die mit einer am Filtergehäusedeckel 3 angeordneten Gegenrastkontur 21 verrastbar ist, wodurch das Ringfilterelement 5' zusammen mit dem Filtergehäusedeckel 3 aus dem Filtergehäusetopf 2 entnehmbar ist. Die Rastkontur 16 kann dabei zugleich auch als Dichtkontur ausgebildet sein.

Betrachtet man die Figuren 1 bis 5 weiter, so kann man erkennen, dass die Führungsrampe 9 einen Hochpunkt 17 und einen im Bereich der Positionierkontur 8, das heißt des Kanals 8' angeordneten Tiefpunkt 18 aufweist, so dass bei einem Verdrehen des Ringfilterelements 5', welches beispielsweise auch als einfacher Siebeinsatz ausgebildet sein kann, das Positionierelement 13, das heißt beispielsweise der Pin 7 automatisch der Positionierkontur 8, beispielsweise dem Kanal 8' zugeführt wird. Dabei kann die Führungsrampe 9 mit unterschiedlichen Zonen ausgebildet sein, so dass beispielsweise die Führungsrampe 9 im Bereich des Hochpunkts 17 zunächst eine Steigung von Null aufweist, im Bereich des Tiefpunkts 18 eine Steigung von ca. 14 - 20°, vorzugsweise ca. 11,2°, und zwischen dem Hochpunkt 17 und dem Tiefpunkt 18 eine Steigung zwischen 20 und 29°, vorzugsweise 16,5°, aufweist. Alternativ ist auch eine Führungsrampe 9 denkbar, die einen mittigen Hochpunkt 17 und beidseitig abfallende Rampenteilstücke aufweist, wobei auch in diesem Fall ein Tiefpunkt 18 im Bereich der Positionierkontur 8, beispielsweise des Kanals 8', angeordnet ist.

Betrachtet man noch die Figur 6, so ist dort eine Ansicht auf ein erfindungsgemäßes Ringfilterelement 5' gezeigt, welches im vorliegenden Fall und gemäß den Figuren 1 bis 4, als Siebeinsatz ausgebildet ist und aus diesem Grund eine Zarge 19 aufweist, die die am oberen Ende angeordnete Rastkontur 16 bzw. Dichtkontur mit der unteren Endscheibe 6 verbindet. Die Zarge 19 stützt dabei ein Sieb 20. An der unteren Endscheibe 6 ist dabei der exzentrisch angeordnete und axial abstehende Pin 7 angeordnet, ebenso wie zwei Stege 15, wobei der Pin 7 ein erstes Positionierelement 13 und die Stege 15 ein zweites Positionierelement 14 bildet.

Mit der erfindungsgemäßen Filtereinrichtung 1 ist es aufgrund der speziell geschalteten Führungseinrichtung 10 mit dem Positionierelement 13 erstmals möglich, die Führungsrampe 9 im Filtergehäusetopf 2 nicht mehr über den gesamten Umfang führen zu müssen, sondern ringsegmentartig auszubilden und dabei den nun nicht mehr von der Führungsrampe 9 überdeckten Bereich 11 des Filtergehäusetopfes 2 durch andere Komponenten 12, beispielsweise einem Heizer, einer Leitung, einem Thermostat oder einem Ventil, zu belegen und dadurch diesen Bereich 11 als bislang nicht erschlossenen Bauraum zunutzen, wodurch eine kompaktere Bauweise möglich ist.

## Patentansprüche

1. Filtereinrichtung (1), insbesondere ein Öl- oder Kraftstofffilter, mit einem, einen Filtergehäusetopf (2) und einen Filtergehäusedeckel (3) aufweisenden Filtergehäuse (4), in welchem ein Einsatz (5) angeordnet ist, an dem oder an dessen unterer Endscheibe (6) ein exzentrisch angeordnetes und axial abstehendes erstes Positionierelement (13) vorgesehen ist, mittels welchem es bei montierter Filtereinrichtung (1) in eine filtergehäusetopfseitige Positionierkontur (8) eingreift, wobei am Filtergehäusetopf (2) eine Führungsrampe (9) vorgesehen ist, die mit einer am Einsatz (5) angeordneten Führungseinrichtung (10) zusammenwirkt,
**dadurch gekennzeichnet,**
- **dass** die Führungsrampe (9) ringsegmentartig ausgebildet ist und sich durchgehend über maximal 270° erstreckt,
- **dass** die Führungseinrichtung (10) ein zweites Positionierelement (14) aufweist,
- **dass** am Einsatz (5) zumindest ein Steg (15) angeordnet ist, der das zweite Positionierelement (14) bildet,
- **dass** zumindest zwei derartige Stege (15) mit unterschiedlichen axialen Längserstreckungen an der unteren Endscheibe (6) des Einsatzes (5) oder an diesem direkt angeordnet sind.

2. Filtereinrichtung nach Anspruch 1,
**dadurch gekennzeichnet,**
**dass** die Führungseinrichtung (10) einstückig mit der unteren Endscheibe (6) des Einsatzes (5) oder einstückig mit dem Einsatz (5) ausgebildet ist.

3. Filtereinrichtung nach einem der vorhergehenden Ansprüche,
**dadurch gekennzeichnet,**
- **dass** die Führungsrampe (9) ringsegmentartig ausgebildet ist und sich durchgehend über maximal 180° erstreckt, oder
- **dass** die Führungsrampe (9) unterbrochen ausgebildet ist und zumindest zwei Ringsegmente aufweist, die sich zusammen über maximal 180° erstrecken.

4. Filtereinrichtung nach einem der Ansprüche 1 bis 3,
**dadurch gekennzeichnet,**
**dass** das an einem oberen Bereich des Einsatzes (5) eine Rastkontur (16) vorgesehen ist, die mit einer am Filtergehäusedeckel (3) angeordneten Gegenrastkontur (21) verrastbar ist.

5. Filtereinrichtung nach einem der Ansprüche 1 bis 4,
**dadurch gekennzeichnet,**
- **dass** die Führungsrampe (9) einen Hochpunkt (17) und einen im Bereich der Positionierkontur (8) angeordneten Tiefpunkt (18) aufweist, oder
- **dass** die Führungsrampe (9) einen Hochpunkt (17) und beidseitig abfallende Rampenteilstücke aufweist, wobei ein Tiefpunkt (18) im Bereich der Positionierkontur (8) angeordnet ist.

6. Filtereinrichtung nach einem der Ansprüche 1 bis 5,
**dadurch gekennzeichnet,**
**dass** der Einsatz (5) als Ringfilterelement (5') oder als Sieb ausgebildet ist.

7. Filtereinrichtung nach einem der Ansprüche 1 bis 6,
**dadurch gekennzeichnet,**
**dass** in dem nicht von der Führungsrampe (9) belegten Bereich (11) des Filtergehäusetopfes (2) eine Zusatzkomponente (12), wie beispielsweise ein Heizer, ein Thermostat, eine Pumpe, ein Ventil oder eine Leitung, angeordnet ist.

8. Filtereinrichtung nach einem der Ansprüche 1 bis 7,
**dadurch gekennzeichnet,**
- **dass** das erste Positionierelement (13) als Pin (7) oder als Rippe ausgebildet ist, und/oder
- **dass** die Positionierkontur (8) als Kanal (8') oder als Ausnehmung, insbesondere als Schlitz, ausgebildet ist.

9. Einsatz (5) einer Filtereinrichtung (1) nach einem der vorhergehenden Ansprüche, an dem oder an dessen unterer Endscheibe (6) ein exzentrisch angeordnetes und axial abstehendes erstes Positionierelement (13) vorgesehen ist, welches als Pin (7) ausgebildet ist,
- wobei am Einsatz (5) eine Führungseinrichtung (10) vorgesehen ist,
- wobei die Führungseinrichtung (10) ein zweites Positionierelement (14) aufweist,
- wobei am Einsatz (5) zumindest ein Steg (15) angeordnet ist, der das zweite Positionierelement (14) bildet,
- wobei zumindest zwei derartige Stege (15) mit unterschiedlichen axialen Längserstreckungen an der unteren Endscheibe (6) des Einsatzes (5) oder an diesem direkt angeordnet sind,
- wobei je nach Drehwinkelstellung zumindest eines der Positionierelemente (13, 14) der Führungseinrichtung (10) in Kontakt mit der Führungsrampe (9) des Filtergehäusetopfs (2) ist, bis zu dem Zeitpunkt, an welchem der Pin (7) in den Kanal (8') der filtergehäusetopfseitigen Positionierkontur (8) eingreift, wobei zu diesem Zeitpunkt keines der Positionierelemente (13, 14) mehr Kontakt zur Führungsrampe (9) hat.

10. Einsatz nach Anspruch 9,
**dadurch gekennzeichnet,**
- **dass** die Führungseinrichtung (10) einstückig mit der unteren Endscheibe (6) des Einsatzes (5) oder einstückig mit dem Einsatz (5) ausgebildet ist, und/oder
- **dass** das an einem oberen Bereich des Einsatzes (5) eine Rastkontur (16) vorgesehen ist, die mit einer am Filtergehäusedeckel (3) angeordneten Gegenrastkontur (21) verrastbar ist.

11. Einsatz nach Anspruch 9 oder 10,
**dadurch gekennzeichnet,**
- **dass** der Einsatz (5) als Ringfilterelement (5') oder als Sieb ausgebildet ist.

12. Verwendung eines Einsatz (5), an dem oder an dessen unterer Endscheibe (6) ein exzentrisch angeordnetes und axial abstehendes erstes Positionierelement (13) vorgesehen ist, in einer Filtereinrichtung (1) nach einem der Ansprüche 1 bis 8,
- wobei am Einsatz (5) eine Führungseinrichtung (10) vorgesehen ist,
- wobei die Führungseinrichtung (10) ein zweites Positionierelement (14) aufweist,
- wobei am Einsatz (5) zumindest ein Steg (15) angeordnet ist, der das zweite Positionierelement (14) bildet,
- wobei zumindest zwei derartige Stege (15) mit unterschiedlichen axialen Längserstreckungen an der unteren Endscheibe (6) des Einsatzes (5) oder an diesem direkt angeordnet sind,
- wobei je nach Drehwinkelstellung zumindest eines der Positionierelemente (13, 14) der Führungseinrichtung (10) in Kontakt mit der Führungsrampe (9) ist, bis zu dem Zeitpunkt, an welchem der Pin (7) in den Kanal (8') eingreift, wobei zu diesem Zeitpunkt keines der Positionierelemente (13, 14) mehr Kontakt zur Führungsrampe (9) hat.

13. Verwendung nach Anspruch 12,
**dadurch gekennzeichnet,**
- **dass** die Führungseinrichtung (10) einstückig mit der unteren Endscheibe (6) des Einsatzes (5) oder einstückig mit dem Einsatz (5) ausgebildet ist, und/oder
- **dass** das an einem oberen Bereich des Einsatzes (5) eine Rastkontur (16) vorgesehen ist, die mit einer am Filtergehäusedeckel (3) angeordneten Gegenrastkontur (21) verrastbar ist.

14. Verwendung nach Anspruch 12 oder 13,
**dadurch gekennzeichnet,**
**dass** der Einsatz (5) als Ringfilterelement (5') oder als Sieb ausgebildet ist.

15. Verwendung nach einem der Ansprüche 12 bis 14,
**dadurch gekennzeichnet,**
**dass** das erste Positionierelement (13) als Pin (7) oder als Rippe ausgebildet ist.

## Claims

1. Filter device (1), in particular oil or fuel filter, comprising a filter housing (4) having a filter housing jar (2) and a filter housing cover (3), in which filter housing an insert (5) is arranged, on which or on the lower end disc (6) of which an eccentrically arranged and axially projecting first positioning element (13) is provided, by means of which it engages, when the filter device (1) is installed, in a positioning contour (8) on a side of the filter housing jar, wherein a guide ramp (9) is provided on the filter housing jar (2), which cooperates with a guide device (10) arranged on the insert (5),
**characterised in that**
- the guide ramp (9) has the form of a ring segment and extends continuously over at most 270°,
- the guide device (10) has a second positioning element (14),
- at least one web (15) is arranged on the insert (5), which web forms the second positioning element (14),
- at least two such webs (15) with different axial longitudinal extents are arranged on the lower end disc (6) of the insert (5) or directly on the insert.

2. Filter device according to claim 1,
**characterised in that**
the guide device (10) is formed in one piece with the lower end disc (6) of the insert (5) or is formed in one piece with the insert (5).

3. Filter device according to any one of the preceding claims,
**characterised in that**
- the guide ramp (9) has the form of a ring segment and extends continuously over at most 180°; or
- the guide ramp (9) has an interrupted form and has at least two ring segments, which together extend over at most 180°.

4. Filter device according to any one of claims 1 to 3,
**characterised in that**
a detent contour (16) is provided on an upper region of the insert (5), which can be locked with a locking contour (21) arranged on the filter housing cover (3).

5. Filter device according to any one of claims 1 to 4,
**characterised in that**
- the guide ramp (9) has a high point (17) and a low point (18) arranged in the region of the positioning contour (8), or
- the guide ramp (9) has a high point (17) and ramp parts that slope on both sides, wherein a low point (18) is arranged in the region of the positioning contour (8).

6. Filter device according to any one of claims 1 to 5,
**characterised in that**
the insert (5) is formed as a ring filter element (5') or as a sieve.

7. Filter device according to any one of claims 1 to 6,
**characterised in that**
in the region (11) of the filter housing jar (2) not occupied by the guide ramp (9), an additional component (12) is arranged, such as for example a heater, a thermostat, a pump, a valve, or a line.

8. Filter device according to any one of claims 1 to 7,
**characterised in that**
- the first positioning element (13) is formed as a pin (7) or a rib, and/or
- the positioning contour (8) is formed as a channel (8') or as a recess, in particular a slot.

9. Insert (5) of a filter device (1) according to any one of the preceding claims, on which or on the lower end disc (6) of which an eccentrically arranged and axially projecting first positioning element (13) is provided, which has the form of a pin (7),
- wherein a guide device (10) is provided on the insert (5),
- wherein the guide device (10) has a second positioning element (14),
- wherein at least one web (15) is arranged on the insert (5), which web forms the second positioning element (14),
- wherein at least two such webs (15) with different axial longitudinal extents are arranged on the lower end disc (6) of the insert (5) or directly on the insert,
- wherein, depending on angular position, at least one of the positioning elements (13, 14) of the guide device (10) is in contact with the guide ramp (9) of the filter housing jar (2), until such time as the pin (7) engages in the channel (8') of the positioning contour (8) on a side of the filter housing jar,
wherein at that time none of the positioning elements (13, 14) is still in contact with the guide ramp (9).

10. Insert according to claim 9,
**characterised in that**
- the guide device (10) is formed in one piece with the lower end disc (6) of the insert (5) or is formed in one piece with the insert (5), and/or
- a detent contour (16) is provided on an upper region of the insert (5), which can be locked with a locking contour (21) arranged on the filter housing cover (3).

11. Insert according to claim 9 or 10,
**characterised in that**
- the insert (5) is formed as a ring filter element (5') or as a sieve.

12. Use of an insert (5) on which or on the lower end disc (6) of which an eccentrically arranged and axially projecting first positioning element (13) is provided, in a filter device (1) according to any one of claims 1 to 8,
- wherein a guide device (10) is provided on the insert (5),
- wherein the guide device (10) has a second positioning element (14),
- wherein at least one web (15) is arranged on the insert (5), which web forms the second positioning element (14),
- wherein at least two such webs (15) with different axial longitudinal extents are arranged on the lower end disc (6) of the insert (5) or directly on the insert,
- wherein, depending on angular position, at least one of the positioning elements (13, 14) of the guide device (10) is in contact with the guide ramp (9), until such time as the pin (7) engages in the channel (8'), wherein at that time none of the positioning elements (13, 14) is still in contact with the guide ramp (9).

13. Use according to claim 12,
**characterised in that**
- the guide device (10) is formed in one piece with the lower end disc (6) of the insert (5) or is formed in one piece with the insert (5), and/or
- a detent contour (16) is provided on an upper region of the insert (5), which can be locked with a locking contour (21) arranged on the filter housing cover (3).

14. Use according to claim 12 or 13,
**characterised in that**
the insert (5) is formed as a ring filter element (5') or as a sieve.

15. Use according to any one of claims 12 to 14,
**characterised in that**
the first positioning element (13) is formed as a pin (7) or a rib.

## Revendications

1. Dispositif de filtre (1), en particulier un filtre à huile ou à carburant, avec un boîtier de filtre (4) présentant un pot de boîtier de filtre (2) et un couvercle de boîtier de filtre (3), dans lequel un insert (5) est agencé, au niveau duquel ou au niveau du disque d'extrémité (6) inférieur duquel un premier élément de positionnement (13) agencé de manière excentrée et dépassant axialement est prévu, au moyen duquel il vient en prise en cas de dispositif de filtre (1) monté dans un contour de positionnement (8) côté pot de boîtier de filtre, dans lequel au niveau du pot de boîtier de filtre (2) une rampe de guidage (9) est prévue, laquelle coagit avec un dispositif de guidage (10) agencé au niveau de l'insert (5),
**caractérisé en ce**
- **que** la rampe de guidage (9) est réalisée comme un segment annulaire et s'étend en continu sur au maximum 270°,
- **que** le dispositif de guidage (10) présente un second élément de positionnement (14),
- **qu'**au niveau de l'insert (5) au moins une traverse (15) est agencée, laquelle forme le second élément de positionnement (14),
- **qu'**au moins deux traverses (15) de la sorte avec différentes étendues longitudinales axiales sont agencées au niveau du disque d'extrémité (6) inférieur de l'insert (5) ou directement au niveau de celui-ci.

2. Dispositif de filtre selon la revendication 1,
**caractérisé en ce**
**que** le dispositif de guidage (10) est réalisé d'un seul tenant avec le disque d'extrémité (6) inférieur de l'insert (5) ou d'un seul tenant avec l'insert (5).

3. Dispositif de filtre selon l'une des revendications précédentes,
**caractérisé en ce**
- **que** la rampe de guidage (9) est réalisée comme un segment annulaire et s'étend en continu sur au maximum 180°, ou
- **que** la rampe de guidage (9) est réalisée de manière interrompue et présente au moins deux segments annulaires qui s'étendent ensemble sur au maximum 180°.

4. Dispositif de filtre selon l'une des revendications 1 à 3,
**caractérisé en ce**
**qu'**un contour de blocage (16) est prévu au niveau d'une zone supérieure de l'insert (5), lequel est encliquetable avec un contour de blocage antagoniste (21) agencé au niveau du couvercle de boîtier de filtre (3).

5. Dispositif de filtre selon l'une des revendications 1 à 4,
**caractérisé en ce**
- **que** la rampe de guidage (9) présente un point haut (17) et un point bas (18) agencé dans la zone du contour de positionnement (8), ou
**que** la rampe de guidage (9) présente un point haut (17) et des pièces partielles de rampe inclinées des deux côtés, dans lequel un point bas (18) est agencé dans la zone du contour de positionnement (8).

6. Dispositif de filtre selon l'une des revendications 1 à 5,
**caractérisé en ce**
**que** l'insert (5) est réalisé comme élément de filtre annulaire (5') ou comme tamis.

7. Dispositif de filtre selon l'une des revendications 1 à 6,
**caractérisé en ce**
**que** dans la zone (11) non occupée par la rampe de guidage (9) du pot de boîtier de filtre (2) un composant supplémentaire (12), tel un chauffage, un thermostat, une pompe, une soupape ou une conduite, est agencé.

8. Dispositif de filtre selon l'une des revendications 1 à 7,
**caractérisé en ce**
- **que** le premier élément de positionnement (13) est réalisé comme broche (7) ou comme nervure, et/ou
- **que** le contour de positionnement (8) est réalisé comme canal (8') ou comme évidement, en particulier comme fente.

9. Insert (5) d'un dispositif de filtre (1) selon l'une des revendications précédentes, au niveau duquel ou au niveau du disque d'extrémité duquel (6) inférieur un premier élément de positionnement (13) agencé de manière excentrée et dépassant axialement est prévu, lequel est réalisé comme broche (7),
- dans lequel un dispositif de guidage (10) est prévu au niveau de l'insert (5),
- dans lequel le dispositif de guidage (10) présente un second élément de positionnement (14),
- dans lequel au moins une traverse (15) est agencée au niveau de l'insert (5), laquelle forme le second élément de positionnement (14),
- dans lequel au moins deux traverses (15) de la sorte sont agencées avec différentes étendues longitudinales axiales au niveau du disque d'extrémité (6) inférieur de l'insert (5) ou directement au niveau de celui-ci,
- dans lequel selon la position d'angle de rotation au moins un des éléments de positionnement (13, 14) du dispositif de guidage (10) est en contact avec la rampe de guidage (9) du pot de boîtier de filtre (2), jusqu'au moment auquel la broche (7) vient en prise dans le canal (8') du contour de positionnement (8) côté pot de boîtier de filtre, dans lequel à ce moment aucun des éléments de positionnement (13, 14) n'a plus de contact avec la rampe de guidage (9).

10. Insert selon la revendication 9,
**caractérisé en ce**
- **que** le dispositif de guidage (10) est réalisé d'un seul tenant avec le disque d'extrémité (6) inférieur de l'insert (5) ou d'un seul tenant avec l'insert (5), et/ou
- **qu'**au niveau d'une zone supérieure de l'insert (5) un contour de blocage (16) est prévu, lequel est encliquetable avec un contour de blocage antagoniste (21) agencé au niveau du couvercle de boîtier de filtre (3).

11. Insert selon la revendication 9 ou 10,
**caractérisé en ce**
- **que** l'insert (5) est réalisé comme élément de filtre annulaire (5') ou comme tamis.

12. Utilisation d'un insert (5), au niveau duquel ou au niveau du disque d'extrémité duquel (6) inférieur un premier élément de positionnement (13) agencé de manière excentrée et dépassant axialement est prévu, dans un dispositif de filtre (1) selon l'une des revendications 1 à 8,
- dans laquelle un dispositif de guidage (10) est prévu au niveau de l'insert (5),
- dans laquelle le dispositif de guidage (10) présente un second élément de positionnement (14),
- dans laquelle au moins une traverse (15) est agencée au niveau de l'insert (5), laquelle forme le second élément de positionnement (14),
- dans laquelle au moins deux traverses (15) de la sorte sont agencées avec différentes étendues longitudinales axiales au niveau du disque d'extrémité (6) inférieur de l'insert (5) ou directement au niveau de celui-ci,
- dans laquelle selon la position d'angle de rotation au moins un des éléments de positionnement (13, 14) du dispositif de guidage (10) est en contact avec la rampe de guidage (9) jusqu'au moment auquel la broche (7) vient en prise dans le canal (8'), dans laquelle à ce moment aucun des éléments de positionnement (13, 14) n'a plus de contact avec la rampe de guidage (9).

13. Utilisation selon la revendication 12,
**caractérisée en ce**
- **que** le dispositif de guidage (10) est réalisé d'un seul tenant avec le disque d'extrémité (6) inférieur de l'insert (5) ou d'un seul tenant avec l'insert (5), et/ou
- **qu'**au niveau d'une zone supérieure de l'insert (5) un contour de blocage (16) est prévu, lequel est encliquetable avec un contour de blocage antagoniste (21) agencé au niveau du couvercle de boîtier de filtre (3).

14. Utilisation selon la revendication 12 ou 13,
**caractérisée en ce**
**que** l'insert (5) est réalisé comme élément de filtre annulaire (5') ou comme tamis.

15. Utilisation selon l'une des revendications 12 à 14,
**caractérisée en ce**
**que** le premier élément de positionnement (13) est réalisé comme broche (7) ou comme nervure.
